Europäisches Patentamt

European Patent Office

Office européen des brevets

(11) Veröffentlichungsnummer: **0 246 407**

**A2**

(12) **EUROPÄISCHE PATENTANMELDUNG**

(21) Anmeldenummer: **87103468.2**

(51) Int. Cl.⁴: **B29C 47/08**

(22) Anmeldetag: **11.03.87**

(30) Priorität: **23.05.86 DE 3617379**

(43) Veröffentlichungstag der Anmeldung:
**25.11.87 Patentblatt 87/48**

(84) Benannte Vertragsstaaten:
**DE FR GB IT**

(71) Anmelder: **HERMANN BERSTORFF**
**Maschinenbau GmbH**
**An der Breiten Wiese 3/5**
**D-3000 Hannover 61(DE)**

(72) Erfinder: **Chszaniecki, Siegfried**
**Ostermannstrasse 5**
**D-3000 Hannover 1(DE)**
Erfinder: **Dienst, Manfred, Dipl.-Ing.**
**Kastanieneck 2**
**D-3167 Burgdorf(DE)**

(54) **Anordnung einer Rückdrucklagerung für Doppelschneckenextruder.**

(57) Es wird eine Anordnung und Ausbildung der Rückdrucklager für einen Doppelschneckenextruder aufgezeigt, die jegliche Einleitung von Rückdruckkräften in das Getriebegehäuse vermeidet. Durch die Anordnung der Rückdrucklager in, vom Getriebegehäuse kraftschlüssig abgekoppelter Weise zwischen dem Getriebe und dem Extrudergehäuse und einer, durch Zuganker gehaltenen Lagerplatte, wird die Einleitung von Rückdruckkräften der Schneckenwellen in das Getriebegehäuse wirkungsvoll vermieden.

Fig.1

## Anordnung einer Rückdrucklagerung für Doppelschneckenextruder

Die Erfindung betrifft eine Anordnung der Rückdrucklager für Doppelschneckenextruder, wie beschrieben im Oberbegriff des Patentanspruchs 1.

Aus der DE-PS 22 57 158 ist ein Rückdrucklager an einem Getriebe für Doppelschneckenextruder bekannt.

Die von den Schnecken ausgehenden Rückdruckkräfte werden durch das Getriebe hindurch geführt und dann von einem, an das Getriebegehäuse angeschraubten Axiallager aufgefangen. Das Axiallager ist in einem Gehäuse angeordnet, welches an eine, an das Getriebegehäuse geschraubte Zwischenplatte befestigt ist.

Der Rückdruck der Schnecken wird bei Längendehnungen der Abstandsbolzen vom Rückdrucklager über die Zwischenplatte auf das Getriebegehäuse übertragen. Die Ausbildung eines freien Spaltes an der gegenüberliegenden Seite des Getriebegehäuses, zwischen diesem und dem Extrudergehäuse, verhindert nicht, daß bei den erwähnten Längendehnungen der Zuganker bzw. Abstandsbolzen in das Getriebegehäuse Rückdruckkräfte der Schnecken eingeleitet werden, weil das Gehäuse des Rückdrucklagers über die Zwischenplatte mit dem Getriebegehäuse verbunden ist.

Die Einleitung von Rückdruckkräften in ein Getriebegehäuse führt zum Verziehen des Gehäuses und somit zu geringfügigen Verkantungen der Lager für die diversen Zahnräder, wodurch der Zahneingriff zwischen der Zahnrädern und Ritzeln verschlechtert und wodurch ein erhöhter Verschleiß der Zahnräder verursacht wird.

Darüber hinaus verursachen an das Getriebegehäuse angeflanschte Rückdrucklager eine Vergrößerung der Baulänge und eine Verteuerung des Getriebes.

Nachteilig ist, die Rückdruckkräfte der Schnecken zunächst durch das Getriebe hindurch zu leiten, um dann über Abstandsbolzen bzw. Zuganker eine Rückleitung wiederum durch das Getriebegehäuse hindurch zum Extrudergehäuse vorzunehmen. Die Gesamtkonstruktion wird durch diese Maßnahme sehr kompliziert und erheblich verteuert.

Es ist die Aufgabe der Erfindung, bei einem Getriebe für einen Doppelschneckenextruder eine Anordnung des Rückdrucklagers zu schaffen, die mit Sicherheit jegliche Einleitung von Rückdruckkräften der Schnecken in das Getriebegehäuse verhindert und zu einer Baugrößenverkleinerung des Getriebes und des Rückdrucklagers führt, wodurch der Preis des Getriebes ebenfalls gesenkt wird.

Die Aufgabe wird durch die Merkmale des kennzeichnenden Teils des ersten Patentanspruchs gelöst.

Durch die Anordnung des die Schneckenrückdruckkräfte aufnehmenden Lagers, in vom Getriebe kraftschlüssig abgekoppelter Weise, vor bzw. zwischen dem eigentlichen Getriebe und dem Extrudergehäuse wird vermieden, daß sich die Rückdruckkräfte im Getriebe negativ bemerkbar machen können. Dadurch, daß die Zuganker direkt die Rückdrucklager in einer Aufnahmeplatte aufnehmen und die Rückdruckkräfte wieder zum Extrudergehäuse bzw. einem Extruderflansch zurückleiten, und zwar auf krüzestem Weg und ohne durch ein Getriebe geführt werden zu müssen, wird jegliche kraftschlüssige Beeinflussung des Getriebes selbst durch Rückdruckkräfte vermieden.

Die, die Rückdrucklager aufnehmende Lagerplatte kann frei geführt und nur durch die Zuganker gehalten werden, wodurch mit einem Minimum an Bauteilen eine einwandfreie Umleitung der Rückdruckkräfte zum Extrudergehäuse sichergestellt wird.

Um ein abgeschlossenes Gehäuse sowohl für die Rückdrucklager als auch für das Getriebe zu schaffen, können die Rückdrucklager in einem gemeinsamen Gehäuse mit dem Getriebe zusammen angeordnet werden, wobei die Lagerplatte für die Rückdrucklager kraftschlüssig von dem Getriebegehäuse abgekoppelt ausgebildet wird.

Um die Montage der Lagerplatte mit dem Rückdrucklagern und den Zugankern zu erleichtert, kann die Platte auf einem separaten Steg im Getriebe angeordnet werden, wobei die Platte selbst von dem Getriebesteg kraftschlüssig abgekoppelt wird, um eine Übertragung von Rückdruckkräften auf das Getriebegehäuse sicher zu vermeiden.

Ein Ausführungsbeispiel der Erfindung wird anhand der Zeichnungen erläutert.

Es zeigen:

Fig. 1 einen Längsschnitt durch eine Anordnung des Rückdrucklagers und des Getriebes in einem gemeinsamen Gehäuse.

Fig. 2 einen Querschnitt durch die Lagerplatte gemäß II-II in Fig. 1.

Fig. 3 einen Längsschnitt durch eine weitere Ausführungsform.

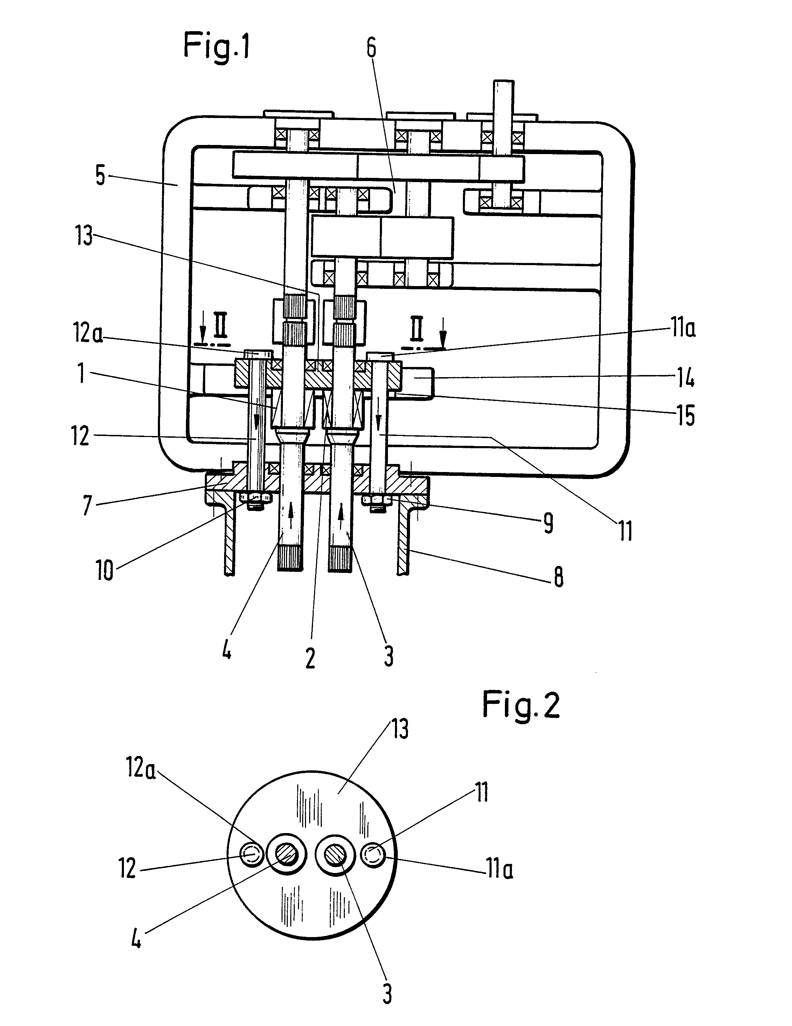

Das in Fig. 1 dargestellte Ausführungsbeispiel zeigt die Rückdrucklager 1 und 2 für die Schneckenwellen 3 und 4, angeordnet in einem gemeinsamen Gehäuse 5 zusammen mit dem Getriebe 6.

An dem Flanschdeckel 7 des Extrudergehäuses 8 sind mittels Muttern 9 und 10 die Zuganker 11 und 12 angeschraubt.

An den getriebeseitig angeordneten Enden der Zuganker 11 und 12 sind Ansätze 11a und 12a ausgebildet für die Halterung der Lagerplatte 13 für die Rückdrucklager 1 und 2.

Da die Lagerplatte 13 gegen eine Schulter 15 des Getriebgehäuses 5 bzw. 5a anliegt und die Rückdruckkräfte der Schnekkenwellen von der Schulter 15 weg wirken, besteht keine kraftschlüssige Verbindung der Lagerplatte 13 bzw. der Zuganker 11 und 12 zum Getriebegehäuse 5 bzw. 5a.

Der Kraftverlauf der Rückdruckkräfte ist wie folgt:
Ausgehend von den Schneckenwellen 3 und 4 wirkt die Rückdruckkraft (verursacht durch die Förderung des Materials in den nicht gezeigten Schneckengängen) entgegen der Förderrichtung der Extruderschnecken in Richtung der Rückdruckla ger 1 und 2 (Pfeile).

Von den Rückdrucklagern 1 und 2 erfolgt die Kraftübertragung auf die Lagerplatte 13 zu den Zugankern 11 und 12 und zurück zum Flanschdeckel 7 des Extrudergehäuses 8, ohne daß irgendwelche Kräfte in das Getriebe gelangen können.

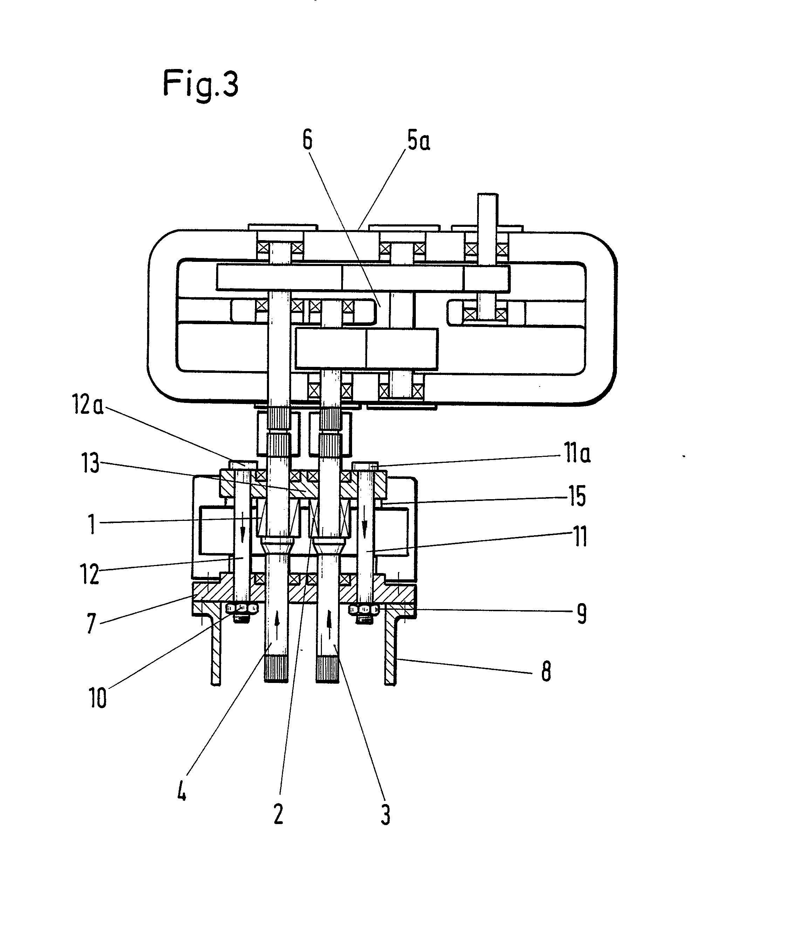

Bei der in Fig. 3 gezeigten Ausführungsform wird ebenfalls jegliche Einleitung von Rückdruckkräften in das Getriebegehäuse 5a vermieden. Dieses Ziel wird durch wenige Bauteile auf eine wirkungsvolle Weise erreicht. In diesem Beispiel werden die Rückdrucklager 1 und 2 vor dem Getriebegehäuse 5a in der Lagerplatte 13 angeordnet.

Aufgrund der gezeigten Ausführungsbeispiele der Erfindung ergeben sich im Vergleich mit der bereits Zuganker aufweisenden Getriebeausbildung gemäß der DE-PS 26 57 158 folgende Vorteile:
-Jegliche Einleitung von Rückdruckkräften in das Getriebegehäuse wird vermieden, weil keine kraftschlüssige Verbindung zum Gehäuse vorhanden ist.
-Es werden nur kurze Zuganker benötigt.
-Auf kostspielige Hohlwellen für die darin angeordneten Zuganker kann verzichtet werden. Die Anordnung von Hohlwellen für die Lagerung von grossen Zahnrädern ist ohnehin nicht vorteilhaft.
-Ein an das Getriebegehäuse rückseitig angeflanschtes Rückdrucklager entfällt, wodurch die Baugröße des Getriebes verringert wird.
-Längendehnungen der Zuganker können sich nicht auf das Getriebegehäuse übertragen.

## Bezugszeichenliste

1 = Rückdrucklager
2 = Rückdrucklager
3 = Schneckenwelle
4 = Schneckenwelle
5 = gemeinsamen Gehäuse
5a = Getriebegehäuse
6 = Getriebe
7 = Flanschdeckel
8 = Extrudergehäuse
9 = Muttern
10 = Muttern
11 = Zuganker
11a = Ansatz
12 = Zuganker
12a = Ansatz
13 = Lagerplatte
14 = Getriebesteg
15 = Schulter

## Ansprüche

1. Anordnung einer Rückdrucklagerung für Doppelschneckenextruder mit zwei angetriebenen Schnekkenwellen, wobei die Rückdruckkräfte der Schnekken von einem Rückdrucklager aufgenommen und über, mit dem Extrudergehäuse verschraubten Zugankern zu dem Extrudergehäuse zurückgeleitet werden,
**dadurch gekennzeichnet,**
daß die, die Rückdruckkräfte der Schneckenwellen (3, 4) aufnehmenden Lager (1, 2) in, vom Getriebegehäuse (5, 5a) kraftschlüssig abgekoppelter Weise zwischen Getriebe (6) und Extrudergehäuse (8) angeordnet sind und von einer getriebeseitig an den Enden der Zuganker (11, 12) angeordneten Lagerplatte (13) aufgenommen werden.

2. Anordnung nach Anspruch 1,
**dadurch gekennzeichnet,**
daß die Lager (1, 2) in einem gemeinsamen, von der Lagerplatte kraftschlüssig abgekoppelten Gehäuse (5) mit dem Getriebe (6) angeordnet sind.

3. Anordnung nach Anspruch 1,
**dadurch gekennzeichnet,**
daß die Lager (1, 2) auf einem kraftschlüssig von der Lagerplatte abgekoppelten Steg (14) im Getriebegehäuse (5) angeordnet sind.

Fig.1

Fig.2

Fig.3